Europäisches Patentamt

(19) European Patent Office

Office européen des brevets

(11) EP 0 926 847 A1

(12) EUROPEAN PATENT APPLICATION

(43) Date of publication:
30.06.1999 Bulletin 1999/26

(51) Int. Cl.$^6$: H04B 10/155, H04B 1/62

(21) Application number: 98123902.3

(22) Date of filing: 16.12.1998

(84) Designated Contracting States:
AT BE CH CY DE DK ES FI FR GB GR IE IT LI LU
MC NL PT SE
Designated Extension States:
AL LT LV MK RO SI

(30) Priority: 23.12.1997 EP 97122770

(71) Applicant:
PIRELLI CAVI E SISTEMI S.p.A.
20126 Milano (IT)

(72) Inventors:
• Mussino, Franco
  10138 Torino (IT)

• Notargiacomo, Massimo
  13878 Candelo (Biella) (IT)
• Ravasio, Giuseppe
  24042 Capriate San Gervasio (BG) (IT)
• Zammarchi, Claudio
  20100 Milano (IT)

(74) Representative:
Giannesi, Pier Giovanni et al
Pirelli S.p.A.
Direzione Proprietà Industriale
Viale Sarca, 222
20126 Milano (IT)

(54) **External optical modulation system comprising a predistorting device**

(57)     The present invention relates to a method and circuit for pre-distorting a signal to eliminate the non-linearities of the input/output characteristics of non-linear stages, and in particular to eliminate third-order non-linearities. More particularly, it relates to a method and circuit for pre-distorting, for external optical modulators of the Mach-Zehnder type.

The method for pre-distorting an electrical signal comprises the stages of:

-   supplying the said signal to at least one distorting circuit;
-   supplying a current to the said distorting circuit along a first conducting path;
-   distorting the said signal in the said distorting circuit;
    characterized in that the said stage of supplying a current to the said distorting circuit comprises the stage of supply a current to a second conducting path parallel to the said first conducting path.

Fig. 2

**Description**

The present invention relates to a method and circuit for pre-distorting a signal to eliminate the non-linearities of the input/output characteristics of non-linear stages, in particular to eliminate third-order non-linearities. More particularly, it relates to a pre-distorting method and circuit for external optical modulators.

An optical signal may be modulated in a direct way, by acting on the optical source, usually a laser, or in an indirect way, by means of an external optical modulator independent of the optical source.

An optical modulator which can be used for the amplitude modulation of an optical signal, by means of a radio-frequency (RF) modulating signal having very high frequencies (such as those of the carriers of television channels, for example those of CATV installations which conventionally range from 40 to 860 MHz), consists, for example, of a device based on a Mach-Zehnder interferometer, constructed on lithium niobate ($LiNbO_3$).

A required characteristic of an external modulator is linearity of modulation, which is very important for use in CATV installations with transmission of the analog type, particularly when the modulating signal is not a single television channel, but consists of numerous television channels, for example 40 to 80 channels.

The electro-optical characteristic (output optical power as a function of the input radio-frequency voltage) of modulators of the indicated type (Mach-Zehnder interferometer) is typically non-linear. To limit the distortion of the signals it is preferable to make the modulator operate in the proximity of the portion of the characteristic which is as nearly linear as possible.

For this purpose, a modulating signal at radio frequency (RF) is applied to an RF electrode of an electro-optical modulator of the Mach-Zehnder interferometer type, and a continuous voltage, which determines the operating point of the modulator, is applied to the same electrode or to a second electrode.

One example of a modulator of this type is that marketed by the Applicant under the symbol PIR PIM1510.

The modulating signal applied to the RF input consists, for example, of the whole set of carriers modulated by the television channels to be distributed to the users.

In the case of a Mach-Zehnder modulator, the variation of the characteristic approximates that of a sine wave, and it is advantageous for the modulator to operate in the proximity of the point of inflection of the sine wave, at an applied operating point voltage VQ.

The modulation characteristic of the Mach-Zehnder modulator, related to the operating point, can be expressed by the relation:

$$Pu = Kz \sin \beta$$

where:

Pu is the output optical power;
Kz is a coefficient which depends on the characteristic of the Mach-Zehnder modulator;
$\beta = \pi V/V_\pi$, the modulation index of the modulating signals, expressed in radians;
V is the variation of the applied voltage with respect to the operating voltage VQ;
$V_\pi$ is a constant.

This characteristic with a sinusoidal variation is identified by two values:

- the value of the voltage, called $V_\pi$, which represents the voltage variation to be applied to the RF (radio-frequency) electrode to bring the optical power from the maximum value to the minimum value;
- the value of the voltage VQ to be applied to the supply electrode to make the operating point equal to the point of inflection of the characteristic with sinusoidal variation, in other words to make it have odd symmetry. In this case, the even-order distortions (comprising the second harmonic of the applied signals) are cancelled, and the odd-order distortions take a closely defined value.

For example, in the case of a Mach-Zehnder modulator of the PIR PIM1510 type, produced by the Applicant, the aforesaid voltages may take the following values: $V_\pi$ = 4.3 V and VQ = 0.7 V.

The value of the operating point voltage VQ is not constant, but varies with time (owing to the accumulation of static charges in the $LiNbO_3$, for example) and also with temperature.

The value of the operating voltage must therefore be adjusted continuously, using as information, for example, the presence and size of the even-order distortions, in other words the second-order intermodulation products, indicated as a whole by CSO (Composite Second Order).

Even when the modulator operates at the aforesaid operating point, which minimizes the even-order distortions, the non-linearity of the input/output characteristic causes odd-order residual distortions (principally of the third order) which are manifested as intermodulation products or CTB (Composite Triple Beats) and cross modulation (XMOD), which degrade the quality of the signals reaching the user. Indeed, the quality of the television channels with amplitude modulation of the carrier is greatly affected by the presence of the aforesaid intermodulation products, the global level of which must be kept sufficiently low, for example more than 65 dB below the level of the vision carrier of each channel, to obtain a good quality of the signals distributed to the users.

To limit these distortions to some extent, it is useful to select a modulation depth which is not too great for the modulating signals (where "modulation depth" signifies the maximum value, expressed as a percentage, of the modulation index $\beta$), for example approximately 3.5% or 4% per channel, in such a way that operation is as close as possible to the linear portion of the characteristic.

In order to limit the distortion introduced by the non-linearity of the characteristic of the modulator, the maximum percentage of use of the modulator is normally approximately 40%. The maximum number of channels which can be applied, allowing for the aforesaid requirements relating to the noise characteristics, is calculated on the assumption that the various carriers, being uncorrelated, are statistically added in quadrature; the sum of the channels is therefore to be considered in terms of power. Consequently, in order not to exceed the aforesaid percentage, the maximum number of channels applicable to the modulator is approximately 100.

To reduce the residual distortions, and in particular the third-order distortions, it has been suggested that the modulating signals should be pre-distorted by using non-linear elements, so that the pre-distortion compensates for the subsequent distortion by the modulator. For this purpose, it is possible to connect before the modulator a distorting circuit, with an input-output characteristic for the radio-frequency signals which is the inverse function of the input-output characteristic of the modulator.

For the purposes of the present invention, "distorting circuit" or "pre-distorting circuit" signifies an electrical circuit, in particular a non-linear circuit, which, when an electrical signal is supplied to its input, generates at its output a signal which is a predetermined, non-linear function of the input signal.

This method and examples of circuits used for this purpose are disclosed, for example, in the article by M. Nazarathy et al., "Progress in Externally Modulated AM CATV Transmission Systems", published in the Journal of Lightwave Technology, vol. 11, no. 1, 01/93, pp. 82-104. In particular, this shows a circuit which uses diodes biased by a current source as non-linear elements.

Patent application EP 0 620 661 and US Patent 5,172,068 describe distorting circuits comprising diodes connected in parallel so that they are of opposite polarity to the input signal. The diodes operate as non-linear elements at a predetermined bias value, considered to be the operating point of the characteristic.

The Applicant has found that the reference circuits cited above present certain disadvantages.

In particular, he has noticed that the amount of distortions produced by them in some cases is insufficient to compensate fully for the distortions generated by the modulator.

The Applicant has also observed that the performance of these circuits vary with a variation in the amplitude of the input signal.

In particular, the Applicant has noticed that, when the amplitude of the applied signal increases, the distortions introduced by distorting circuits of this type decrease with respect to the theoretical value and are not capable of compensating for the distortions introduced by the modulator.

The Applicant considers that this is due to the fact that the operating point of the diodes varies with the variation of the amplitude of the applied signal.

In particular, it is considered that the even-order distortions generate continuous components which modify the operating point of the diodes.

The Applicant has also noticed a considerable discrepancy between the measurements of CTB and XMOD for the same bias current of the distorting circuits.

According to the present invention, it has been found that by allowing the voltage across the terminals of the diodes to vary in a controlled way it is possible to produce the required amount of distortions in response to a wide range of variation of the amplitude of the input signal.

In a first aspect, the present invention relates to a circuit for pre-distorting an electrical signal, comprising:

an input terminal suitable to receive an electrical input signal of variable amplitude;

an output terminal, suitable for emitting an electrical output signal in response to the said input signal;

a first branch, interposed between the said input terminal and the said output terminal, having at least a first non-linear element and a first capacitance connected in series;

a second branch, interposed between the said input terminal and the said output terminal, having at least a second non-linear element and a second capacitance connected in series;

the said first branch and the said second branch being connected in parallel;

a bias circuit connected electrically to the said first non-linear element and to the said second non-linear element in such a way that a first direct current passes through the said first and second non-linear elements along a first conducting path;
characterized in that it comprises:
a second conducting path for a second direct current in parallel to the said first conducting path.

In a second aspect, the present invention relates to a method for pre-distorting an electrical signal, comprising the stages of:

- supplying the said signal to at least one distorting circuit;
- supplying a current to the said distorting circuit along a first conducting path;
- distorting the said signal in the said distorting circuit;
         characterized in that the said stage of supplying a current to the said distorting circuit comprises the stage of supplying a current to a second conducting path parallel to the said first conducting path.

In a third aspect, the present invention relates to an optical emitter with external modulation, comprising:

a pre-distorting circuit to which a modulating signal is applied, comprising at least two biased non-linear elements;
an electro-optical modulator, which is suitable of supplying a modulated optical signal at its output, has an electrical input to which the pre-distorted modulating signal is applied, and has an optical input;
a radiation source connected to the optical input of the said modulator;
characterized in that it comprises at least one resistive element in parallel with the said two non-linear elements.

In a fourth aspect, the present invention relates to a method for pre-distorting an electrical input signal, comprising the stages of:

- supplying the said signal to a first and a second distorting circuit;
- supplying the said first and second distorting circuits along a first conducting path;
- distorting the said signal in the said first and second distorting circuits;
- combining the said signal distorted by the said first and second distorting circuits;
- characterized in that the said stage of supplying the said first and second distorting circuits comprises the stage of controlling the voltage across the terminals of the said first and second distorting circuits in such a way as to obtain a ratio D3/C which increases substantially by 2 dB for each dB increase of the said electrical input signal.

For the purposes of the present invention, "supplying the first and second distorting circuits" signifies providing an electrical value, of voltage or current, to the said first and second distorting circuits in such a way as to bias them at the desired operating point.
In a fifth aspect, the present invention relates to a method for transmitting an optical signal, comprising the stages of:

- pre-distorting a modulating signal comprising at least two non-linear elements;
- supplying the said two non-linear elements;
- supplying an optical radiation to an electro-optical modulator;
- modulating the said optical radiation with the said pre-distorted modulating signal;
- characterized in that the said stage of supplying the said two non-linear elements comprises the stage of controlling the voltage across the terminals of the said two non-linear elements in such a way as to obtain values of CTB and XMOD smaller than or equal to -60 dB.

Further details can be obtained from the following description, with reference to the attached drawings which show:

in Figure 1, a diagram of an optical emitter with external modulation;
in Figure 2, a simplified electrical diagram of a distorting circuit;
in Figure 3, a complete electrical diagram of a distorting circuit;
in Figure 4, the variation of the measurement of the third-harmonic distortion of the distorting circuit shown in Figure 3;
in Figure 5, an electrical diagram of a distorting circuit according to one embodiment of the present invention;
in Figure 6, the variation of the measurement of the third-harmonic distortion of the distorting circuit shown in Figure 5.

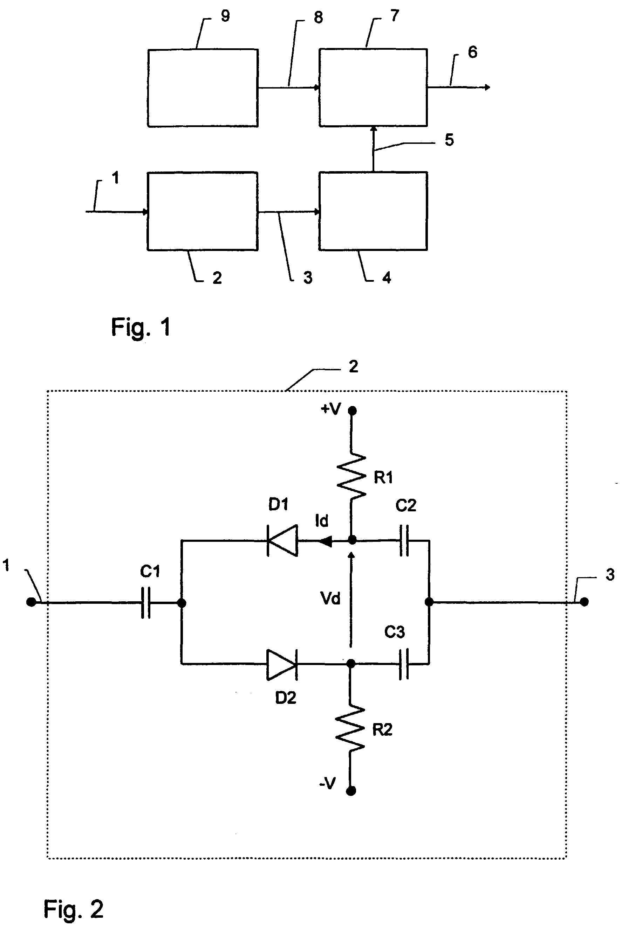

An optical emitter with analog external modulation will now be illustrated with reference to the block diagram in Figure 1.

The number 1 indicates an input for electrical modulating signals at radio frequency, contained within a given frequency band. The input 1 is connected to a distorting circuit 2. This distorting device 2 is provided with an input-output characteristic (output voltage as a function of the input voltage) selected as indicated below. The distorting device 2 is preferably followed by an amplifier 4, operating in the frequency band of the electrical modulating signals at radio frequency, which, for example, in the case of CATV systems, range from 40 to 860 MHz.

The output 5 of the amplifier 4 is connected to an electrical input of an electro-optical modulator 7.

A radiation source 9, suitable for generating a continuous optical signal, is connected to an optical input of the modulator 7 through an optical fibre 8. This source may consist of a laser, particularly one of the semiconductor type. The modulator 7 sends the modulated optical signal to the output 6.

The input-output characteristic of the distorting device 2 is conveniently selected on the basis of the input-output characteristic of the electro-optical modulator, in such a way as to compensate for its non-linearity, in other words in such a way as to obtain a relation which is as nearly linear as possible between the power of the optical signal at the output of the modulator and the voltage of the modulation signal present at the input 1; in particular, it is conveniently selected in such a way as to minimize the third-order distortions of the modulator 7. The distorting device 2 predominantly generates third-order distortions with an amplitude equal, but of opposite sign, to those generated by the non-linear characteristics of the modulator 7.

The amplifier 4 is used to match the amplitude of the signals processed in the pre-distorting circuit to the amplitude of the signals required by the modulator for obtaining adequate modulation depths.

To obtain an input-output characteristic of the distorting device 2 of this type, diodes or transistors may be used as non-linear elements.

In the example described, and preferably in cases of operation in the terrestrial television broadcasting frequency band (40 - 860 MHz), the distorting circuit 2 uses diodes as non-linear elements.

Figure 2 shows a simplified electrical diagram of a distorting circuit 2.

The input signal to be distorted is applied to the input terminal 1. The signal is transferred through a capacitor C1 to two parallel branches, each consisting of a diode, D1 and D2, and a capacitor, C2 and C3. These diodes D1 and D2 are disposed with their polarities opposite to each other. The diode D1 has its cathode connected to the capacitor C1 and its anode connected to the terminal of a resistor R1 and to the capacitor C2. The other terminal of the resistor R1 is connected to the positive power supply voltage +V. The diode D2 has its anode connected to the capacitor C1 and has its cathode connected to the terminal of the resistor R2 and to the capacitor C3. The other terminal of the resistor R2 is connected to the negative power supply voltage -V.

A resistor Rp, in series with a capacitance, these not being shown in the figure, is preferably connected in parallel with the two branches described above. This resistor Rp provides a greater degree of freedom in the design of the circuit. In particular, it enables the level of the input signal (attenuated by the circuit containing the diodes D1 and D2) to be increased in such a way as to permit the use of the subsequent amplifier stage 4 with a gain of not more than 15-18 dB.

The capacitor C2 and the capacitor C3 are connected to the output terminal 3, where the distorted signal will be present.

The capacitors C1 to C3 are used to make the bias current flow only in the diodes.

In Figure 2, each branch has only one diode, but there may be more than one, depending on the services required.

The power supply voltages +V and -V must be selected in such a way as to bias the diodes D1 and D2 at an operating point where their current/voltage characteristics have an appropriate non-linearity; in particular, by varying the operating point of the diodes it is possible to vary the size of the distortions produced.

The circuit shown in Figure 2 is capable of predominantly generating 3rd-order distortions, but also those of higher order. The size of these distortions is controlled by the value of the power supply voltages +V and -V. However, the 2nd-order distortions are cancelled as a result of the symmetry of this circuit. It is also possible to use a single diode, for example by eliminating the diode D2, the capacitor C3, the resistor R2 and the power supply voltage -V. If this is done, this non-symmetrical circuit will also produce 2nd-order distortions. In the following text, reference will be made to symmetrical circuits of the type shown in Figure 2. However, persons skilled in the art will be able to apply the principle disclosed in the following text to the case of non-symmetrical circuits using a single diode.

The Applicant has constructed an optical emitter with external modulation, which is described in the following text with reference to the block diagram in Figure 1.

The electro-optical modulator 7 which is used is a Mach-Zehnder modulator, model PIR PIM1510, produced by the Applicant.

The radiation source 9 consists of a laser, in particular one of the DFB type.

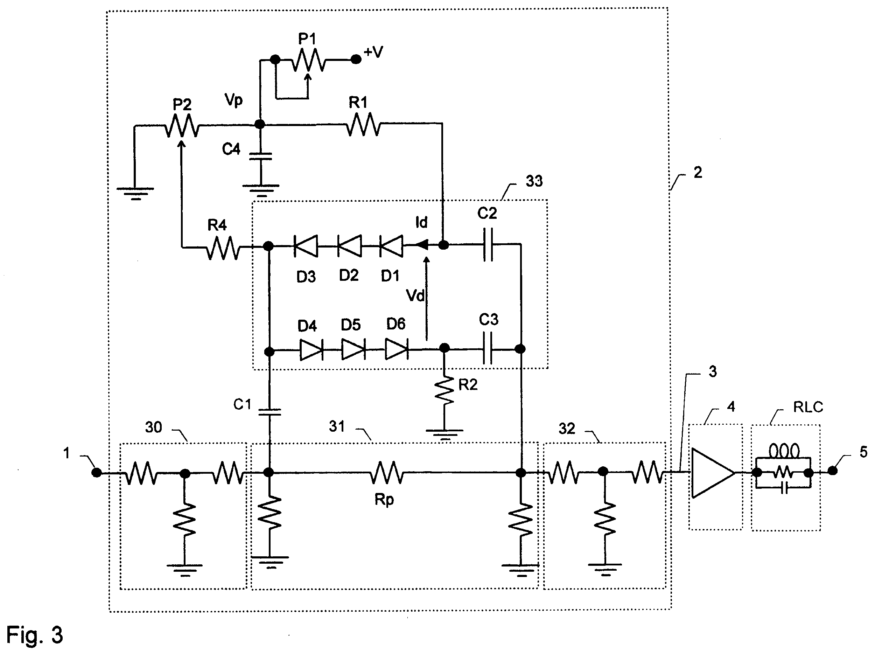

The group consisting of the distorting device 2 followed by the amplifier 4 is shown in Figure 3. By comparison with the simplified electrical diagram of a distorting circuit shown in Figure 2, the complete electrical diagram of a distorting circuit shown in Figure 3 additionally shows the circuits, described in the following text, for interfacing with and connection to the other elements of the optical emitter.

The input signal applied to the input 1 is sent to a T-shaped resistive attenuator 30, in other words a T configuration (10 $\Omega$, 120 $\Omega$, 10 $\Omega$) with an attenuation of approximately 3.5 dB, and then to a $\pi$-shaped resistive attenuator 31, in other words a $\pi$ configuration (100 $\Omega$, 82.5 $\Omega$, 100 $\Omega$) which has an attenuation of approximately 9 dB. It is then sent to a T-shaped resistive attenuator 32 (5 $\Omega$, 270 $\Omega$, 5 $\Omega$) with an attenuation of approximately 1.5 dB.

The resistive attenuators 30, 31 and 32 are used to adapt the impedances and signal levels appropriately between the various elements of the circuit.

In this case, the non-linear circuit 33 consists of 6 diodes D1 to D6, disposed in two branches connected in parallel. Each branch consists of three diodes D1, D2, D3, D4, D5, D6; the diodes D1, D2, D3 in one branch are disposed with their polarities opposite to those of the diodes D4, D5, D6 in the other branch. The diodes used are preferably Schottky diodes of the MA4E976L type, marketed by Macon, but other types of diode may be used, for example diodes with a low threshold voltage.

In each branch there is a capacitor, C2 (100 nF) and C3 (100 nF) respectively, in series with the diodes for decoupling the continuous component; a first terminal of the capacitor C2 is connected to the anode of the diode D1, a first terminal of the capacitor C3 is connected to the cathode of the diode D6, and the second terminals of the capacitors C2 and C3 are connected to each other.

The non-linear circuit 33 is connected, for the alternating component of the signal, in parallel with the resistive attenuator 31. A capacitor C1 (100 nF) connects the junction between the anode of D4 and the cathode of D3, which forms the input terminal of the non-linear circuit 33, to one end of the $\pi$-shaped resistive attenuator 31. The second terminals of C2 and C3 are connected to the other end of the $\pi$-shaped resistive attenuator 31, which forms the output terminal of the non-linear circuit 33. The previously mentioned resistance Rp (82.5 $\Omega$) consists in this case of the resistor, connected in series with respect to the input signal, of the $\pi$-shaped resistive attenuator 31. The resistance Rp with an appropriate value enables the level of the input signal 1 to be increased above that which would be necessary for a circuit not having this resistance. Moreover, if the diodes of the distorting circuit 33 are considered to be equivalent to a non-linear resistance whose value depends on the bias current, the resistance Rp of the resistive attenuator 31 will be connected in parallel with this non-linear resistance. The presence of Rp therefore causes an increase in the linear component of the signal which is carried to the output of the distorting circuit, by comparison with that carried by the diodes of the distorting circuit 33. Since the size of the non-linear components (predominantly of the 3rd order) with respect to that of the linear components must be such that the distortions of the modulator are compensated (in other words, the ratio between the non-linear and linear components must have a specific value, depending on the amplitude of the applied signal), it is necessary (in the presence of Rp) to increase the amplitude of the input signal 1 to obtain the ratio required by the modulator. In fact, it will be recalled that the distortion components, those of the 3rd order for example, increase (as a function of the amplitude of the input signal) in a much more marked way (those of the 3rd order increase proportionally to the cube of the amplitude of the applied signal) than the linear components, which increase only in a proportional way. The increase of the amplitude of the input signal causes an equal increase in the output signal and the necessity for less amplification by the amplifier 4, with a smaller noise component.

A first variable potentiometer P1 (10 k$\Omega$) having two lateral terminals and a variable central terminal has one lateral terminal connected to a power supply voltage +V (12 V), while the other lateral terminal and the central terminal are connected to a lateral terminal of a second potentiometer P2 (50 k$\Omega$). The other lateral terminal of the potentiometer P2 is connected to the ground terminal. The potentiometers P1 and P2 have the function of splitting the power supply voltage +V, and produce a voltage Vp ($\approx$ 2.7 V) at the point of connection between them. A capacitor C4 (100 nF) is connected between this point and the ground terminal to stabilize the voltage Vp. The voltage Vp is applied to the anode of the diode D1 through a resistor R1 (33 k$\Omega$). The cathode of the diode D6 is connected to the ground terminal through a resistor R2 (33 k$\Omega$).

The central terminal of the potentiometer P2 is connected between the two diode branches D1-D6, in particular between the cathode of the diode D3 and the anode of the diode D4 through a resistor R4 (33 k$\Omega$).

The diode bias current (approximately 30 $\mu$A) is obtained through the two high-value resistors R1 and R2 (approximately 33 k$\Omega$). The capacitors C1, C2 and C3 have a value of approximately 100 nF each.

The diode bias current, which determines the amount of distortion produced by the distorting circuit 2, is regulated at the calibration stage by varying the voltage (Vp) by means of the potentiometer P1.

The balancing of the currents in the two diode branches, to minimize the second-order distortions, is regulated by means of the potentiometer P2.

The circuit is optimized by making an appropriate choice of the value of the resistors of the $\pi$-shaped resistive attenuator 31 and of the diode bias current in such a way as to obtain the desired distortion.

The amplifier 4 conveniently has an adequate amplification value and also appropriate characteristics of dynamics, linearity and noise which must be taken into consideration at the design stage by known methods which are not examined here. To equalize the frequency response of the amplifier 4, in order to improve both the frequency response and the variation of the distortions with the frequency, an RLC network (10 nH, 10 Ω, 22 pF) has been connected at its output.

The amplification is approximately 17 dB and is obtained by means of the CA 922 amplifier marketed by Motorola.

The signal level to be applied to the input is -17 dBm to obtain a modulation depth of 4%, and -18 dBm for 3.5%.

Measurements were made of CTB (according to the measurement method described in IEC Publication 728-1) and XMOD (according to the NCTA measurement method), with 80 television channels and with a modulation index of 3.5%, on the optical modulator linearized by means of the aforesaid distorting circuit; the values of these measurements are shown in the following table.

| Frequency (MHz) | CTB (dB) | XMOD (dB) |
|---|---|---|
| 55.25 | -65 | -55 |
| 355.25 | -64 | -54 |
| 547.25 | -65 | -55 |

The results of the measurement relate to the case in which the value of CTB is minimized by varying the diode bias current. This value is clearly better than that of XMOD.

It has been found that an improvement of the value of XMOD can be obtained by reducing slightly (by approximately 10%) the value of the diode bias current. In this case, however, the value of CTB will become worse.

The Applicant has noticed that both the value of CTB and that of XMOD depend principally on the size of the 3rd-order distortions. The amount of pre-distortions produced, particularly those of the 3rd order, which are of greater size, are determined by varying the bias current of the diodes D1-D6 of the distorting device 2. The Applicant would therefore have expected that the measurements of CTB and XMOD would have a minimum value for the same size of pre-distorting produced and consequently for the same diode bias current. However, the operating point, determined by the potentiometers P1 and P2, which minimizes the value of CTB is different from the operating point which minimizes the value of XMOD.

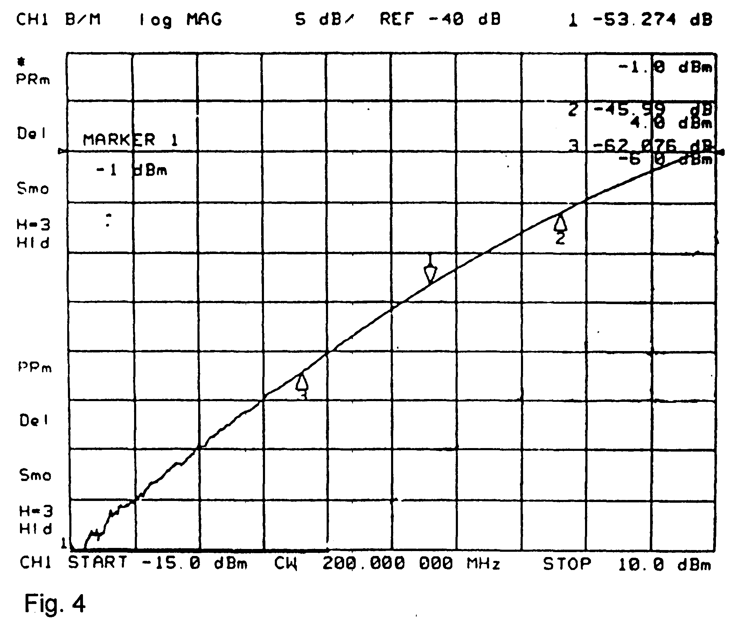

The third-harmonic distortion of the distorting circuit was therefore measured by measuring the ratio D3/C (the ratio of the 3rd-harmonic distortion D3 to the value of the carrier C) with the variation of the input signal level from -15 dBm to +10 dBm, at the frequency of 200 MHz, as shown in Fig. 4. The input-output characteristic of a non-linear device can be approximated analytically by an expansion in a power series of the following type, for example:

$$Vu = K1Vi + K2Vi^2 + K3Vi^3 + K4Vi^4 \tag{1}$$

where Vu is the output signal, Vi is the input signal and K1, K2, K3, K4 are constants.

If the input signal is a sine wave, for example:

$$Vi = V \cos \omega t \tag{2}$$

the output is as follows:

$$Vu = K1 V \cos \omega t + (1/2) K2 V^2 \cos 2 \omega t + (1/4) K3 V^3 \cos 3 \omega t + (3/4) K3 V^3 \cos \omega t + ... \tag{3}$$

with the expansion halted at the terms of the 3rd order.

From the last equation (3) it will be noticed that the 3rd-harmonic distortions increase proportionally to the cube of the amplitude of the input signal, and therefore increase by 3 dB for each dB increase of the input signal, and therefore the ratio D3/C increase by 2 dB for each dB increase of the input signal.

The measurements of the ratio D3/C due to the distorting device 2, represented in Figure 4, show that the distortions do not increase by 2 dB for each dB increase of the input signal, as would have been expected, but show a lesser increase.

In particular, the variation of the distortions shows that an applied signal at a level above 0 dBm causes an increase of less than 2 dB for each dB increase of the level of the applied signal.

The Applicant considers that this behaviour is attributable to the presence of even-order distortions of any order, but predominantly of the 2nd order (since the amplitude is greater than that of the higher-order distortions), which also generate continuous components, such as the term $(1/2)\ K2\ V^2$ in Equation (3).

The Applicant noticed that, with reference to the diagram in Figure 3 and in accordance with the symmetrical structure of the non-linear circuit 33, at the point of connection between the capacitors C2 and C3, in other words at the output of the diodes D1-D6, the even-order signal components originating from the two parallel branches compensate for each other by cancelling each other out, while the continuous components are added algebraically to the bias currents of the diodes D1-D6.

The Applicant then noticed that, in the circuit shown in Figure 3, the presence of continuous current components due to the even-order distortions causes the variation of the operating point of the diodes, and in particular causes a reduction of the operating point voltage of the diodes. This variation of the operating point causes a reduction of the size of the odd-order distortions generated and in particular of those of the 3rd harmonic.

Consequently, an increase in the level of the signal applied to the distorting circuit is accompanied by an increase in the size of the variation of the operating point, and therefore the increase in 3rd-harmonic distortion is less than what is predicted theoretically, as shown by the curve in Figure 4.

The Applicant then noticed that the presence of this effect makes it impossible to keep the compensation for the odd-order distortions unchanged with variations of the applied signal level, as would be necessary in practice, since television signals are amplitude modulated with a modulation depth which is variable with time.

In the circuit in Figure 3, and in the circuits described in the documents cited previously, the diodes D1-D6 are current biased. The battery voltage +V is applied to the diodes D1-D6 through a resistance network (P1, P2, R1, R2).

When the diodes D1-D6 are biased by means of current generators or voltage generators and resistances (P1, P2, R1, R2), the voltage of the operating point of the diodes D1-D6 can vary with the variation of the input signal. For example, the currents due to the 2nd-harmonic components are added algebraically to the bias current and cause the voltage of the operating point of the diodes D1-D6 to vary.

According to the invention, the Applicant has found that, in order to eliminate the undesired behaviours described previously, it is necessary to bias the diodes in such a way that their operating points vary in a controlled way.

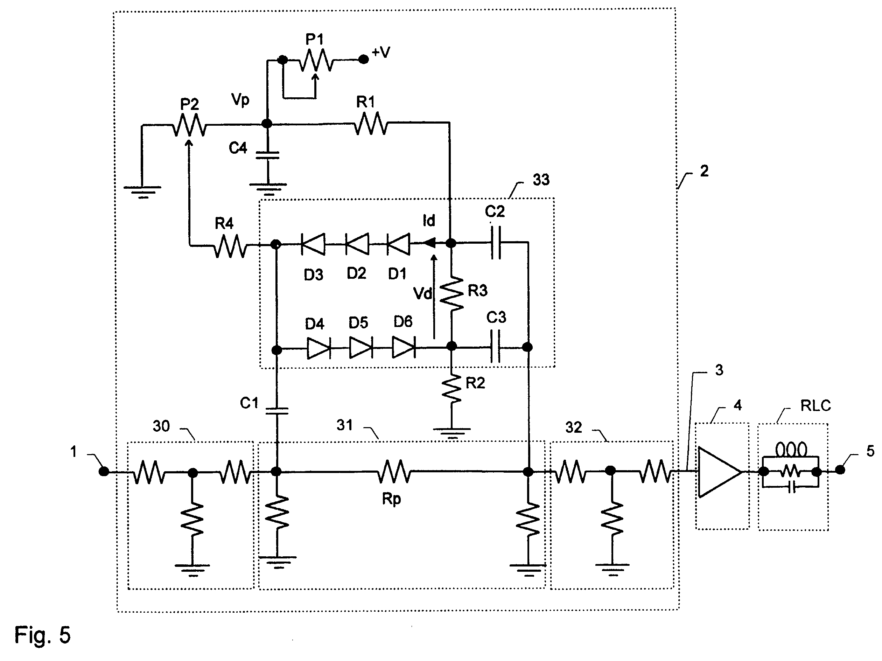

One embodiment of the distorting device according to the present invention is shown in Figure 5.

An additional resistor R3, connected between the anode of D1 and the cathode of D6, has been introduced into the non-linear circuit 33, to provide a conducting path for the continuous component. The resistor R3 is therefore connected in parallel to the series of diodes D1-D6.

The value of the resistor R3 can be determined in the following way.

A multiple-carrier signal (for example 80 carriers in the 40-860 MHz band), with an amplitude such that a modulation depth of 4% per carrier is obtained, is applied to the input of the circuit shown in Figure 3. In general, R3 is determined with a signal comprising a number of carriers greater than or equal to the maximum expected number of carriers, and with a modulation depth greater than or equal to the maximum desired modulation depth.

The potentiometer P1 is adjusted to bias the diodes D1-D6 appropriately in such a way as to minimize the value of the CTB. If necessary, the potentiometer P2 is also adjusted in such a way as to minimize the second-order distortions.

The voltage Vd(CTB) across the terminals of the diodes D1-D6 and the current Id(CTB) flowing through the diodes D1-D6 are measured.

The same operations are carried out in such a way as to minimize the value of XMOD. Again, the voltage Vd(XMOD) across the terminals of the diodes D1-D6 and the current Id(XMOD) flowing through the diodes D1-D6 are measured.

The difference between the two measured currents, $\Delta I = Id(CTB) - Id(XMOD)$ and the difference between the two measured voltages, $\Delta V = Vd(CTB) - Vd(XMOD)$ are calculated.

The value of the resistor R3 is given by the ratio between the absolute values of $\Delta V$ and $\Delta I$.

In the example shown in Figure 3, $\Delta V = 40$ mV and $\Delta I = 20\ \mu A$, and therefore R3 is 2 k$\Omega$.

It is considered that variations of not more than 10% in this value do not cause an unacceptable deterioration of performance in terms of CTB and XMOD.

The values of the resistors R1 and R2 of the bias circuit of the diodes D1-D6 are set at 2 k$\Omega$. These values must be selected in such a way that the bias voltage Vd is of the order of 2.5 - 3 V, since the diode bias current and the current passing through R3 flow through these resistors.

The value of these two resistors is not critical, but only affects the final value of the voltage Vp required for optimal biasing. When the aforesaid resistance values are selected, the optimal bias voltage for Vp is found to be approximately 2.7 V.

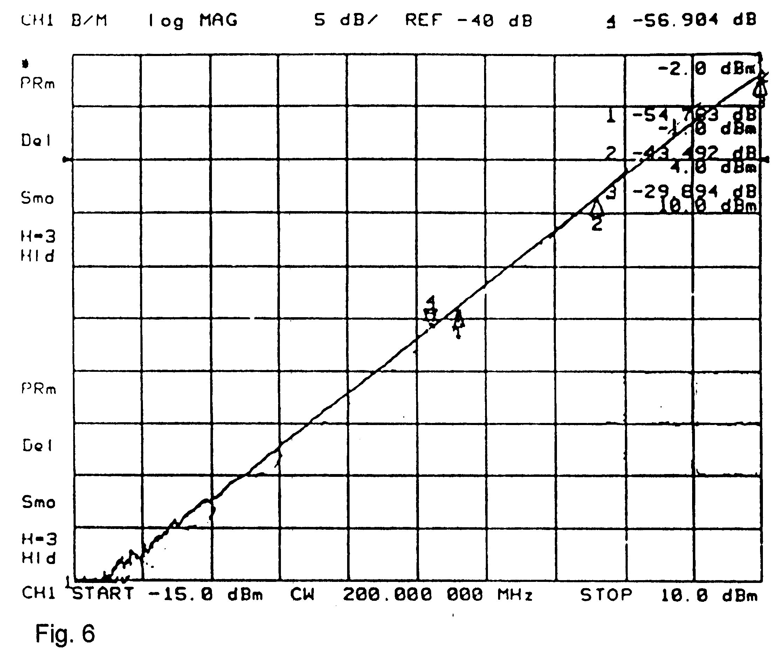

By measuring D3/C with the variation of the level of the signal applied to the distorting circuit, a variation is obtained which is practically equal to the typical variation, in other words approximately 2 dB ($\pm$ 0.2 dB) increase of D3/6 per dB increase of the input signal, even for signal levels around +5 dBm and above, as may be seen in Figure 6.

The measurements of CTB and XMOD are made, with 80 channels and a modulation index of 3.5%, on the complete circuit, giving the results shown in the following table, which show the good agreement between the two measurements for a single diode bias condition. It should be noted that the measurement of XMOD is less than -55 dB, preferably less than or equal to -60 dB and in particular less than or equal to -64 dB, in the frequency range under consideration, for values of CTB less than or equal to -60 dB and in particular less than or equal to -64 dB.

| Frequency (MHz) | CTB (dB) | XMOD (dB) |
|---|---|---|
| 55.25 | -65 | -65 |
| 355.25 | -64 | -64 |
| 547.25 | -65 | -65 |

In the example described above, a resistor R3 is preferably connected in parallel with the diodes D1-D6, but variations which are feasible for persons skilled in the art may be made on the basis of the principle disclosed herein. For example, it is possible to use a resistor in series with one or more diodes, connected in place of the resistor R3 in Figure 5. Another variant consists, for example, of a resistor (or a series of one resistor and one or more diodes) connected in parallel with the diodes D1-D3 and a resistor (or a series of one resistor and one or more diodes) in parallel with the diodes D4-D6.

Other variants, connected in place of the resistor R3, may consist of a resistor and an inductance in series, or of a variable potentiometer.

In these variants also, there is a conducting path for the bias current, in parallel with the diodes, such that the variations of voltage across the terminals of the diodes D1-D6 due to variations of the amplitude of the input signal are compensated for.

In the embodiment described here, a single power supply voltage has preferably been used, but it is possible to use a plurality of bias voltages, for example one positive and one negative, by modifying the circuit in ways which are feasible for those skilled in the art. It is thus possible to adjust the performance of the two non-linear branches independently.

The principle of the present invention is also valid for other distorting circuits, for example those based on transistors (or transistors and diodes) as non-linear elements, disposed in a configuration of the push-pull type.

The Applicant has also noticed that the circuit shown in Figure 2 provides an additional variation of the operating point of the diodes D1 and D2 which is considered to be due to a detection of the peak of the signal components by the diodes D1 and D2 in combination with the capacitors C2 and C3. The Applicant has found that it is possible to reduce or even to eliminate this disadvantage by using capacitors C2 and C3 with a high capacitance, above the 100 nF normally used and preferably approximately 1 $\mu$F, in such a way as to decrease their self-impedance for the alternating components of the signal.

## Claims

1. Circuit for pre-distorting an electrical signal, comprising:

   an input terminal suitable for receiving an electrical input signal of variable amplitude;
   an output terminal, suitable for emitting an electrical output signal in response to the said input signal;
   a first branch, interposed between the said input terminal and the said output terminal, having at least a first non-linear element and a first capacitance connected in series;
   a second branch, interposed between the said input terminal and the said output terminal, having at least a second non-linear element and a second capacitance connected in series;
   the said first branch and the said second branch being connected in parallel;
   a bias circuit connected electrically to the said first non-linear element and to the said second non-linear element in such a way that a first direct current passes through the said first and second non-linear elements along a first conducting path;
   characterized in that it comprises:
   a second conducting path for a second direct current in parallel to the said first conducting path.

2. Circuit for pre-distorting an electrical input signal according to Claim 1, characterized in that the said first non-linear element comprises at least one diode.

3. Circuit for pre-distorting an electrical input signal according to Claim 1, characterized in that the said second non-linear element comprises at least one diode.

4. Circuit for pre-distorting an electrical input signal according to Claims 2 and 3, characterized in that the said diodes have opposite polarities so that they are in series with respect to the said first direct current.

5. Circuit for pre-distorting an electrical input signal according to Claim 1, characterized in that the said first direct current flows in the said first non-linear element and in the said second non-linear element.

6. Circuit for pre-distorting an electrical input signal according to Claim 1, characterized in that the said electrical input signal is electrically connected to the said input terminal through a capacitance.

7. Circuit for pre-distorting an electrical input signal according to Claim 1, characterized in that the said second conducting path comprises at least one resistor.

8. Circuit for pre-distorting an electrical input signal according to Claim 7, characterized in that the said second conducting path comprises at least one diode.

9. Circuit for pre-distorting an electrical input signal according to Claim 1, characterized in that the said bias circuit has a positive bias terminal and a negative bias terminal.

10. Circuit for pre-distorting an electrical input signal according to Claim 9, characterized in that the said positive bias terminal is connected between the said first non-linear element and the said first capacitance.

11. Circuit for pre-distorting an electrical input signal according to Claim 9, characterized in that the said negative bias terminal is connected between the said second non-linear element and the said second capacitance.

12. Circuit for pre-distorting an electrical input signal according to Claim 1, characterized in that the said first and the said second non-linear element are connected in series with respect to the said first direct current.

13. Circuit for pre-distorting an electrical input signal according to Claim 12, characterized in that the said first and the said second non-linear element form the said first conducting path.

14. Method for pre-distorting an electrical signal, comprising the stages of:

- supplying the said signal to at least one distorting circuit;
- supplying a current to the said distorting circuit along a first conducting path;
- distorting the said signal in the said distorting circuit;
  characterized in that the said stage of supplying a current to the said distorting circuit comprises the stage of supplying a current to a second conducting path parallel to the said first conducting path.

15. Method for pre-distorting an electrical input signal according to Claim 14, additionally comprising the stages of:

- supplying the said signal to a first and a second distorting circuit;
- supplying a current to the said first and second distorting circuits along a first conducting path;
- distorting the said signal in the said first and second distorting circuits;
- combining the said signal distorted by the said first and second distorting circuits;
  characterized in that it comprises the stage of supplying a current to a second conducting path parallel to the said first conducting path.

16. Method for pre-distorting an electrical input signal according to Claim 14 or 15, characterized in that the said second conducting path comprises a resistive path.

17. Method for pre-distorting an electrical input signal according to Claim 15, characterized in that the said second conducting path is parallel to the series of the said first and second distorting circuits.

18. Optical emitter with external modulation, comprising:

a pre-distorting circuit to which a modulating signal is applied, comprising at least two biased non-linear elements;

an electro-optical modulator, which is suitable for supplying a modulated optical signal at its output, having an electrical input to which the pre-distorted modulating signal is applied, and having an optical input;

a radiation source connected to the optical input of the said modulator;

characterized in that it comprises at least one resistive element in parallel with the said two non-linear elements.

19. Optical emitter with external modulation according to Claim 18, characterized in that it comprises a power supply unit for supplying the said two non-linear elements and the said resistive element.

20. Optical emitter with external modulation according to Claim 18, characterized in that the said electro-optical modulator comprises an interferometric modulator of the Mach-Zehnder type.

21. Method for pre-distorting an electrical input signal, comprising the stages of:

-   supplying the said signal to a first and a second distorting circuit;
-   supplying the said first and second distorting circuits along a first conducting path;
-   distorting the said signal in the said first and second distorting circuits;
-   combining the said signal distorted by the said first and second distorting circuits;
-   characterized in that the said stage of supplying the said first and second distorting circuits comprises the stage of controlling the voltage across the terminals of the said first and second distorting circuits in such a way as to obtain a ratio D3/C which increases substantially by 2 dB for each dB increase of the said electrical input signal.

22. Method for transmitting a modulated optical signal corresponding to an electrical modulating signal, comprising the stages of:

-   pre-distorting the said modulating signal by means of at least two non-linear elements, thus generating a pre-distorted electrical signal;
-   supplying the said two non-linear elements;
-   supplying an optical radiation to an electro-optical modulator;
-   modulating the said optical radiation with the said pre-distorted modulating signal, by means of the said electro-optical modulator, thus providing a modulated signal;
-   characterized in that it comprises controlling the voltage across the terminals of the said two non-linear elements in such a way as to obtain values of CTB and XMOD smaller than or equal to -60 dB in the said modulated signal.

23. Method for transmitting a modulated optical signal according to Claim 22, characterized in that controlling the voltage comprises making a current flow in parallel with the said two non-linear elements.

Fig. 1

Fig. 2

Fig. 3

EP 0 926 847 A1

13

CH1 B/M    log MAG     5 dB/  REF -40 dB      1 -53.274 dB

Fig. 4

EP 0 926 847 A1

Fig. 5

CHl B/M    log MAG      5 dB/  REF -40 dB      1 -56.904 dB

Fig. 6

EP 0 926 847 A1

European Patent
Office

**EUROPEAN SEARCH REPORT**

Application Number

EP 98 12 3902

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP 0 475 376 A (GEN INSTRUMENT CORP) 18 March 1992 * abstract * * column 4, line 49 - column 5, line 17; figures 2,3 * | 1-23 | H04B10/155 H04B1/62 |
| D,A | EP 0 620 661 A (SUMITOMO ELECTRIC INDUSTRIES) 19 October 1994 * abstract * * column 2, line 20 - line 42 * * column 7, line 31 - column 8, line 20 * * figures 2,3 * | 1-23 | |
| D,A | US 5 172 068 A (CHILDS RICHARD B) 15 December 1992 * abstract * * column 1, line 36 - line 61 * * figures 2,4,7 * | 1-23 | |

TECHNICAL FIELDS
SEARCHED     (Int.Cl.6)

H04B
H03F

The present search report has been drawn up for all claims

| Place of search | Date of completion of the search | Examiner |
|---|---|---|
| THE HAGUE | 26 February 1999 | Ribbe, A |

**ANNEX TO THE EUROPEAN SEARCH REPORT
ON EUROPEAN PATENT APPLICATION NO.**                    EP 98 12 3902

This annex lists the patent family members relating to the patent documents cited in the above-mentioned European search report.
The members are as contained in the European Patent Office EDP file on
The European Patent Office is in no way liable for these particulars which are merely given for the purpose of information.

26-02-1999

| Patent document cited in search report | | Publication date | Patent family member(s) | | Publication date |
|---|---|---|---|---|---|
| EP 0475376 | A | 18-03-1992 | US | 5210633 A | 11-05-1993 |
| | | | CA | 2051227 A | 13-03-1992 |
| | | | DE | 69125075 D | 17-04-1997 |
| | | | DE | 69125075 T | 11-09-1997 |
| | | | JP | 6342178 A | 13-12-1994 |
| EP 0620661 | A | 19-10-1994 | CA | 2120965 A | 15-10-1994 |
| | | | JP | 7193453 A | 28-07-1995 |
| | | | US | 5600472 A | 04-02-1997 |
| US 5172068 | A | 15-12-1992 | NONE | | |

EPO FORM P0459

For more details about this annex : see Official Journal of the European Patent Office, No. 12/82